# EUROPEAN PATENT APPLICATION

(11) **EP 2 517 578 A1**
(43) Date of publication of application: **31.10.2012**
(21) Application number: 12166684.6
(22) Date of filing: 25.03.2009
(51) Int. Cl.: A23L 1/32, A23L 1/24, A23L 1/035

(54) **A process and formulation for making an egg product with increased functionality and flavor**

(30) Priority: 31.03.2008 US 59776
(62) Divisional of application: 09156228.0
(71) Applicant: Kraft Foods Global Brands LLC, Northfield, IL 60093 (US)
(72) Inventor: Topinka, John Benjamin, Evanston, IL Illinois 60202 (US); Prager, Stacey A., Evanston, IL Illinois 60202 (US); Gass, Paul Victor, Glenview, IL Illinois 60025 (US); Lis, Daniel G., Round Lake, IL Illinois 60073 (US); Brown, Peter Harris, Glenview, IL Illinois 60025 (US); Class, Robert F., Windthrop Harbor, IL Illinois 60096 (US); Silver, Richard Stuart, Wilmette, IL Illinois 60091 (US); Zbylut, Steven Donald, Chicago, IL Illinois 60616 (US)
(74) Representative: Murray, Adrian D'Coligny

(57) **Abstract**

Treated egg products are provided for imparting the flavor of egg to foods that include egg yolk treated simultaneously with protease and phospholipase. Food flavoring composition are also provided for imparting the flavor egg that can be used in lower amounts than whole egg or egg yolk. Additionally, methods are provided for preparing the egg flavored food compositions. Such egg yolk compositions are prepared by the simultaneous application of phospholipase enzyme and protease enzyme. The method further includes egg flavored food products, such as mayonnaise and salad dressings, which are prepared with the food flavoring composition. The egg flavor compositions can be used in a variety of food products to provide egg flavor and enhanced functionality.

## Description

Treated egg products having increased functionality and egg flavor and methods of preparing such egg products are provided herein. Such egg products are prepared by the simultaneous application of phospholipase and protease enzymes. The egg product can be used as a food flavoring composition and/or can be used to replace egg yolk or whole egg in food compositions at much lower than traditional levels and still provide the flavor and functionality as that of a 100 percent egg yolk formula.

### BACKGROUND

Clinical studies consistently demonstrate that consumption of high levels of cholesterol increases the risk of coronary heart disease. Eggs are often used in conventional food products and, unfortunately, are rich in fats, lipids, and cholesterol. These components are found primary in the egg yolk. One egg yolk contains about 218 milligrams of cholesterol. Mayonnaise spreads, certain types of salad dressings, desserts such as custards and puddings, and bakery items generally contain egg yolks and/or whole eggs.

In recent years there has been increased consumer demand for foods with reduced total fat and cholesterol. Among the food compositions that have been developed in response to this increased demand are mayonnaise spreads that are lower in cholesterol, Several approaches have been utilized to reduce cholesterol levels in mayonnaise. For example, reduced fat mayonnaise products have been developed with reduced egg content. However, because egg serves as the emulsifier for mayonnaise and is critical to sustaining the emulsion, reducing the egg content of the product requires the use of additional thickeners and chemical emulsifiers in order to achieve the necessary texture and consistency in the mayonnaise. Generally, these chemical emulsifiers impart off flavors in the food product and consumers often perceive such chemical emulsifiers as artificial and, thus, as unhealthy. The use of chemical emulsifiers may also be precluded by standard of Identity regulations for products such as genuine mayonnaise.

Although many food compositions can be made by eliminating or reducing the amount of egg used, especially egg yolk, the resulting food compositions are generally adversely affected. For example, the elimination of eggs often results in loss in flavor, poor texture, and off odor. Thus, such food products resulting from the simple elimination or reduction of egg content have generally not received high acceptance by consumers.

It was quickly discovered that the flavor lost with the removal or reduction of egg content in food products needed to be replaced. Artificial flavors can be used to a limited extent, but again, this comes with lower acceptance from consumers. Previous attempts have been made using enzymes, such as proteases, to increase the flavor properties of egg products. However, these egg sources with enhanced flavor are generally expensive from a production standpoint because the flavored egg product serves only as a flavoring and has little functionality (i.e., emulsifying properties) in the final food product.

Numerous other attempts have been made to treat eggs and/or egg yolks to make them more acceptable for use in food products for diet or health conscious consumers. U.S. Patent No. 6,660,312 is directed to treating egg yolk fluid with phospholipase A enzyme to convert phospholipids to lysophospholipids. The treated yolk fluid is then treated with supercritical carbon dioxide to reduce cholesterol content in the yolk fluid.

JP 61031065A2 is directed to a processed egg yolk reported to have improved emulsifiability, freeze resistance, and heat resistance. The processed yolk of JP 8103106 is obtained by treating yolk with protease enzyme to effect partial hydrolysis; about 1-15 weight percent salt is added to the processed yolk.

JP 2002325559A2 is directed to a processed egg product having improved flavor. The method of JP 2002325559A2 includes treating egg yolk with acidic phospholipase A1 enzyme and heat treatment at 60-75°C for 7-40 minutes; oil-in-water emulsions prepared using such processed egg yolks are reported to have excellent heat resistance.

JP 2002233334A2 to Shigeko et al. describes a method for producing a processed egg product in which unsalted egg yolk is treated with phospholipase A2 enzyme for 0.5 to 4.5 hours followed by addition of a protease enzyme for further processing for a total treatment time of 1 to 5 hours. Shigeko et al. reported an attempted simultaneous reaction where the protease and phospholipase A2 were added at the same time but the resulting treated egg yolk did not provide a stable mayonnaise emulsion. The sequential enzyme treatment method taught by Shigeko et al. Is not desirable from a microbial stability and manufacturing standpoint because the length of time required to conduct sequential enzyme treatments increases the total amount of time the egg yolk is exposed to elevated temperatures, thus increasing the risk of microbial contamination and growth.

JP11289979A to Toshihiro et al. is directed to a method of sequentially treating egg yolk with phospholipase A and then protease. It is reported that the resulting oil-in-water emulsion has good emulsion stability and heat resistance.

There are a number of drawbacks associated with the processes and treated egg yolk products known in the art. As can be seen from the above summary, the problem of providing an egg yolk product having both the emulsification and flavor properties necessary for use In food products has not been adequately addressed in the food processing arts. The process for making treated egg yolk provided herein represents a significant improvement over prior art treated egg yolks and overcomes the problems associated with the prior art methods.

The replacement of a portion of whole egg and/or egg yolk In food products with lesser amounts of treated egg yolk could result in healthier products for consumers and significant cost savings from a manufacturing standpoint. There remains a need for an egg product that has all of the desirable characteristics of a normal egg yolk, such as flavor and functionality (i.e., emulsification properties) but which could be used at much lower than traditional levels in food products, thus allowing the resulting food products to have a reduced fat and cholesterol content as compared to traditional recipes. Such treated egg yolk compositions and methods are provided herein.

### SUMMARY

Treated egg yolks with enhanced functionality and flavor and methods for preparing such treated egg yolks are provided herein. Such compositions are provided by the simultaneous treatment of egg yolk with phospholipase and protease enzymes. The resulting treated egg yolk compositions may be used in a wide variety of food products.

The treated egg yolk compositions described herein confer to food products in which they are incorporated increased functionality and egg flavor and can be used in reduced amounts as compared to the amount of whole eggs and/or egg yolks normally used in the food products. The treated egg yolk compositions described herein are particularly useful because (1) they permit the use of less egg yolk in the preparation of food products to achieve the same emulsification characteristics, stability, and flavor intensity as is achieved using higher levels of untreated eg yolk or whole eggs in food products; (2) the treated egg yolk and food products containing them have greater heat stability and stability to freeze/thaw; (3) enable the use of lower amounts of oil in food emulsion products, such as mayonnaise, yet avoid separation and retain good texture and flavor; (4) they provide significant cost savings In the preparation of food products for mass consumption because of the reduced amount of egg yolk required to achieve food products with satisfactory organoleptic and flavor characteristics comparable to those of food products produced using conventional amounts of untreated egg yolks or whole eggs; and (5) they exhibit characteristics of robustness and functionality after treatment with elevated temperatures.

A process is provided for preparing an egg yolk composition having improved egg yolk functionality and flavor, the process comprising: (1) preparing an aqueous egg yolk mixture; (2) preheating the egg yolk mixture from step (1) to a temperature of about 40 to about 60°C; (3) simultaneously treating the egg yolk mixture from step (2) with phospholipase and protease enzymes at a time and temperature effective for converting at least about 50 percent of the phospholipids to lysophospholipids and for cleaving egg yolk proteins to provide a peptide mixture comprising at least about 600 ppm peptides less than about 13 kDa, at least about 2500 ppm peptides of about 14 to about 105 kDa, less than about 2500 ppm peptides of about 106 kDa to about 240 kDa, to provide a treated egg yolk mixture. Preferably, proteases are effective to provide a mixture comprising at least about 7000 ppm peptides less than about 13 kDa, at least about 3000 ppm peptides of about 14 to about 105 kDa, less than about 1000 ppm peptides of about 106 kDa to about 240 kDa.

The conversion of phospholipids to lysophospholipids can be determined by HPLC, such as described by Lesnefsky et al., Analytical Biochemistry, 285:246-254 (2000), which is incorporated herein by reference In its entirety. While the peptides may be quantified using a variety of methods known in the art, the various methods are likely to give differing results depending on the precise processing conditions and inherent limitations of the methods. For example, gel electrophoresis has limited use for peptides less than 13 kDa. Therefore, for definitional purposes herein, conversion of proteins to peptides having a molecular weight less than about 13 kDa is estimated by adding trichloroacetic acid (TCA) to the treated egg yolk to a concentration of about 12 weight percent to precipitate peptides greater than about 13 kDa, although the size of peptides precipitated can depend on the properties of the peptides. The precipitate is removed by centrifugation. The small peptides (about 13 kDa or less) remaining in the supernatant are then measured by UV spectrophotometric absorbance at 280 nm. The larger peptides of about 14 to about 105 kDa and about 106 to about 240 kDa are measured using another sample of the treated egg yolk (containing all molecular weight ranges) using the Lab-on-a-Chip micro-fluidic capillary electrophoresis (*µ*CE) Agilent 2100 Bioanalyzer from Agilent Technologies (Santa Clara, CA), as described in the AgilentProtein 230 Kit Guide (Publication Number: G2938-90054, Last Updated: 9/2006), which is incorporated herein by reference in its entirety. The Lab-on-a-Chip method does not accurately measure small peptides (i.e., peptides under about 13 kDa); therefore, the quantity of small peptides is estimated using the method discussed above and not the Lab-on-a-Chip method described herein. The general procedure for the Lab-on-a-Chip method is as follows. Aliquots of the treated liquid yolk are prepared by diluting the treated liquid yolk with a solution of Dulbecco's phosphate buffered saline containing 1 percent SDS from Sigma-Aldrich (St. Louis, MO) in 50 mL conical tubes. The samples are diluted to 100,000 parts per million (ppm) ± 1 percent and vortexed twice for approximately 10 to 20 seconds to ensure that the sample was dispersed. The samples are then shaken for approximately 45 minutes at approximately 250 rpm on a Bamstead Max Q 2000 Orbital shaker from Bamstead International (Dubuque, IA). Each sample is then centrifuged for 10 minutes at 4750 rpm in a Beckman Coulter Allegra X-15R Centrifuge from Beckman Coulter, Inc. (Fullerton, CA) to remove any insoluble structures, I.e., granules, floating In the liquid phase. Samples are prepared and run under both reducing and non-reducing conditions (with and without DL-Dithiothreital, DTT (Sigma-Aldrich, D0632-1G)) according to the Agilent Protein 230 Kit Guide. The samples are then filtered with a GHP Acrodisc 13mm syringe filter (P/N 4554T) just prior to loading the sample wells. The content of peptides from about 14 to about 105 kDa and peptides from about 106 to about 240 kDa is calculated therefrom.

Preferably, less than 2 volume percent aggregates form upon heating the treated egg yolk mixture at 71.1°C for 20 minutes, more preferably no aggregates form upon heating the treated egg yolk mixture at 71.1°C for 20 minutes. Optionally, the treated egg yolk mixture can be heated for a time and at a temperature effective to inactivate the enzymes and to pasteurize the treated egg composition. The heated egg composition is then cooled to provide the treated egg yolk composition.

As used herein, "simultaneous" or similar expressions are defined as treating an egg yolk mixture by addition of protease and phospholipase enzymes at the same or substantially the same time but also includes sequential addition of protease and phospholipase enzymes provided that no more than 10 percent of the protease reaction or, alternatively, no more than 30 percent of the phospholipase reaction has been completed prior to the addition of the second added enzyme. For example, when protease is the first added enzyme, "simultaneous" treatment includes addition of phospholipase after no more than 10 percent of the protease reaction has been completed.

As has not previously been recognized in the art, selection of the protease is critical to achieving both desirable egg flavor and functionality of the treated egg yolk and, ultimately, the food product incorporating the treated egg yolk therein. Suitable protease enzymes for use in the processes described herein have both endo- and exopeptidase activities, such that when contacted with the egg yolk mixture the protease cleaves the egg yolk proteins to provide a peptide mixture comprising at least about 6000 ppm peptides less than about 13 kDa, at least about 2500 ppm peptides of about 14 to about 105 kDa, less than about 2500 ppm peptides of about 106 kDa to about 240 kDa. Preferably, proteases are effective to provide a peptide mixture comprising at least about 7000 ppm peptides less than about 13 kDa, at least about 3000 ppm peptides of about 14 to about 105 kDa, less than about 1000 ppm peptides of about 106 kDa to about 240 kDa.

The treated egg yolks exhibit characteristics of robustness and functionality after treatment with elevated temperatures. Less than 2 volume percent aggregates form upon heating the treated egg yolk at 71.1° C for 20 minutes. Preferably, substantially no aggregates form upon heatin the treated liquid egg yolk at 71.1°C for 20 minutes.

While not wishing to be bound by theory, it is believed that small peptides (i.e., peptides under about 5 kDa) are created by exopeptidases and are associated with flavor. In the case of protein hydrolysates, it is known that flavorful components are comprised of small peptides and free amino acids such as glutamate and aspartate. While also not wishing to be bound by theory, it is believed that peptides larger than about 5 to about 25 kDa are created by endopeptidas and are associated with emulsion stabilization. In egg yolk-mediated food emulsions, the yolk phospholipids are the primary emulsifying agents, but the yolk proteins are also believed to play a role in emulsification. While not wishing to be bound by theory, it is believed that the yolk proteins migrate to the oil-water interface and help prevent coalescence of oil droplets. For this role, egg yolk peptides of about 14 to about 240 kDa are believed to be most efficient. The proteases useful in the methods provided herein provide the correct balance of both small flavorful peptides and emulsion stabilizing peptides.

Suitable phospholipase enzymes include those having phospholipase A1 activity, phospholipase A2 activity, or a combination therof, although enzymes having phospholipase A1 activity are preferred. Of course, mixtures of enzymes having phospholipase A1 and phospholipase A2 activity may also be used, if desired. Suitable phospholipase enzymes are effective for converting at least about 50 percent, preferably at least about 60 percent, of the phospholipids present in the egg yolk mixture to lysophospholipids. Conversion of phospholipids to lysophospholipids can be measured by HPLC, such as described by Lesnefsky et al., Analytical Biochemistry, 285:246-254 (2000), which is incorporated herein by reference in its entirety.

The treated egg yolk compositions described herein can be used in food products to impart enhanced egg yolk functionality such that the treated egg yolk can be used in reduced amounts as compared to the amount of egg yolk or whole egg normally used in the food product. The treated egg yolk compositions can also be used as a food flavoring composition and can be used to replace egg yolk or whole egg in food compositions in which egg flavoring is desired. The treated egg yolk compositions described herein can be incorporated at much lower than traditional levels and still retain the flavor and functionality as that of a 100 percent egg yolk formula (i.e., the amount of untreated whole egg and/or egg yolk normally used to prepare the food product). Preferably, the treated egg yolk can be used at about 30 to about 75 percent of the amount of whole egg and/or egg yolk traditionally used in the food product. The treated egg yolk composition described herein can be used to replace egg yolk or whole egg in food products such as bakery items, a water-continuous emulsion type food such as mayonnaise, salad dressings, bread, and desserts, such as custards, cakes, pies, and the like. Food compositions containing such treat egg yolk products are also provided. Thus, for example, a mayonnaise product may be prepared by Incorporating an appropriate amount of the treated egg yolk. Preferably, the amount of treated egg yolk used in the mayonnaise product replaces the entire amount of whole egg or egg yolk normally used in the mayonnaise product, and more preferably is used in reduced amounts as compared to the amount of whole egg and/or egg yolk normally used in the mayonnaise product, such as In the amount of about 30 to about 75 percent of the amount of whole egg and/or egg yolk normally used in the mayonnaise product. Thus, food products including the treated egg yolk composition have reduced fat and cholesterol as compared to food products prepared with natural whole eggs and/or egg yolks.

These and other advantages of the treated egg yolk compositions described herein will become apparent to those skilled in the art upon consideration of the present specification.

### BRIEF DESCRIPTION OF THE DRAWINGS

FIG. 1 is a flow chart generally illustrating the preparation of a treated egg product in accordance with an exemplary embodiment

FIG. 2 is an electropherogram as described in Example 1 illustrating the effect of different proteases on the protein content of the treated egg yolks in accordance with an exemplary embodiment.

FIG. 3(A) is a gel and an electropherogram comparing the inventive heated sample (1R) with the prior art heated sample (2R) of Example 2.

FIG. 3(B) is a gel and an electropherogram paring the Inventive unheated sample (3R) with the prior art unheated sample (4R) of example, 2.

FIG. 3(C) is a gel and an electropherogram comparing the inventive heated sample (1R) with the prior art unheated sample (4R) of Example 2.

FIG. 4 is a gel and electropherogram comparing the inventive heated sample (1 R) of Example 2 with sample (5R) of Example 3 processed using the sequential process of the prior art method.

FIG. 5 is an electropherogram comparing the product of the simultaneous method described herein with the products of the comparative sequential methods of Example 4.

### DETAILED DESCRIPTION

Treated egg yolk compositions with improved functionality and flavor and methods of preparing such egg yolk compositions are provided herein. To prepare the treated egg yolk composition, liquid egg yolk is treated simultaneously with protease and phospholipase enzymes. Such treatment permits development of improved flavor and improved emulsification properties desired for use in food compositions conventionally requiring whole egg and/or egg yolk. Food products prepared with the treated egg yolk compositions described herein have rheological characteristics generally associated with food products incorporating untreated fresh or salted egg yolk.

The treated egg yolk compositions described herein can be used to prepare reduced egg content food compositions, such as salad dressings, mayonnaise, desserts, and baked goods. The treated egg yolk compositions can be used in food products to replace natural egg yolk or whole egg at much lower than traditional levels and still retain the flavor and functionality as that of a 100 percent egg yolk formula (i.e., conventional formula). Preferably, the treated egg yolk composition can be used at about 30 to about 75 percent of traditional levels of natural egg yolk or whole egg In the food product. Food products containing the treated egg yolk product are a healthier alternative to food products containing whole egg or egg yolk because of the lower level of cholesterol and fat-containing egg yolk in the resulting food products. The treated egg yolk products described herein are not only beneficial to the consumer's health but also to the manufacturing of food products, such as mayonnaise spreads, due to significant cost savings. Replacing a significant amount of egg yolk and/or whole egg with treated egg yolk In the manufacture of mayonnaise provides a significant cost savings while still providing the flavor, texture, and appearance of conventional mayonnaise.

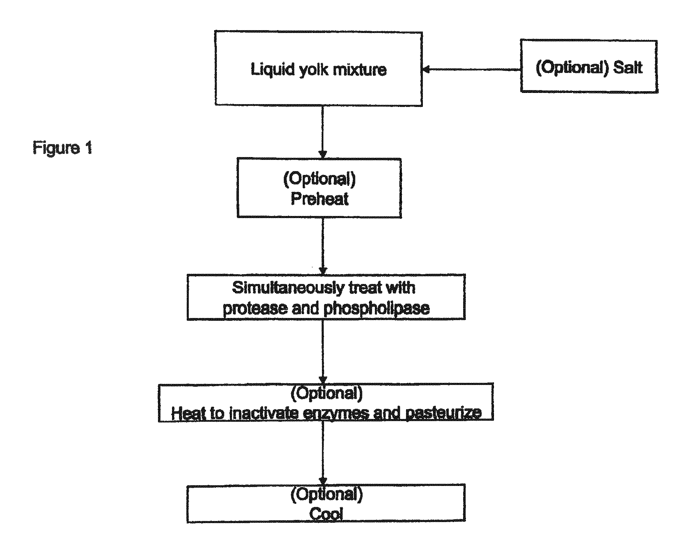

FIG. 1 provides a flow chart illustrating a process In accordance with an embodiment. It has been found that treating liquid egg yolk under the conditions described herein provides compositions with enhanced functionality and flavor, thereby providing a treated egg yolk composition that can be used in lesser amounts than untreated fresh or salted egg yolk. Generally, a relatively homogenous liquid egg yolk mixture is prepared. Egg yolks useful for the processes described herein are not limited to yolks provided from fresh whole eggs. It is well understood that most of the emulsifying capacity is provided by the yolk and that the egg white fraction of the egg is relatively ineffective in this regard. Likewise, most of the egg flavor is provided by the yolk. While whole, unseparated eggs (i.e., both yolk and egg white) may be used to prepare the liquid egg yolk used in the methods provided herein, it is preferred to separate the yolk from the egg white fraction such that only the yolk fraction is used in the egg yolk mixture. In this aspect, the separated egg yolk may be combined after enzyme treatment with the egg white and used as one would similarly use whole eggs, if desired. Other forms of egg may be used to provide the liquid yolk mixture used herein. For example, dehydrated egg yolk can be rehydrated with an aqueous solution and/or frozen egg yolk can be thawed and used, if desired. Generally, the egg yolk should be treated to provide a liquid egg yolk mixture, such as by blending and adding an aqueous solution as needed. Commercially available liquid egg yolk may be used, such as from Rose Acre Farms (Seymour, IN), if desired. Preferably, the liquid egg yolk mixture comprises up to about 20 percent salt, more preferably about 2 to about 10 percent salt. Although not critical, salting the liquid egg yolk Is advantageous from a microbial stability perspective and also because salt improves the fluidity of the liquid yolk (e.g., prevents gelling).

Preferably, the liquid egg yolk mixture is preheated to a temperature of about 40 to about 60 °C, such as in a heat exchanger, prior to enzyme treatment. The liquid egg yolk mixture is then treated simultaneously with protease and phospholipase enzymes at a temperature and for a time effective for converting at least about 50 percent of the phospholipids present in the egg yolk mixture to lysophospholipids and to provide a peptide mixture comprising at least about 6000 ppm peptides less than about 13 kDa, at least about 2500 ppm peptides of about 14 to about 105 kDa, and less than about 2500 ppm peptides of about 106 kDa to about 240 kDa. Preferably, proteases are effective to provide a peptide mixture comprising at least about 7000 ppm peptides less than about 13 kDa, at least about 3000 ppm peptides of about 14 to about 105 kDa, and less than about 1000 ppm peptides of about 106 kDa to about 240 kDa. Preferably, the egg yolk mixture is treated simultaneously with protease and phospholipase enzymes at about 40 to about 60°C, more preferably about 45 to about 55°C, for about 1 to about 6 hours. Alternatively, the liquid egg yolk mixture may be treated simultaneously with protease and phospholipase enzymes at lower temperatures for a longer length of time, such as at about 4 to about 45°C for about 0.1 to about 14 days, although enzyme treatment at colder temperatures for long periods of time should be avoided when using phospholipase enzymes having lipase side activities.

The conversion of phospholipids to lysophospholipids can be determined by HPLC, such as described by Lesnefsky et al., Analytical Biochemistry, 285:246―254 (2000), which is incorporated herein by reference in its entirety. While the peptides may be quantified using a variety of methods known in the art, the various methods are likely to give differing results depending on the precise processing conditions and Inherent limitations of the methods. For example, gel electrophoresis has limited use for peptides less than about 14 kDa. Therefore, for definitional purposes herein, conversion of proteins to peptides having a molecular weight less than about 13 kDa is estimated by adding trichloroacetic acid (TCA) to the treated egg yolk to a concentration of about 12 weight percent to precipitate peptides greater than about 13 kDa, although the size of peptides precipitated can depend on the properties of the peptides. The precipitate is removed by centrifugation. The small peptides (about 13 kDa or less) remaining in the supernatant are then measured by UV spectrophotometric absorbance at 280 nm. The larger peptides of about 14 to about 105 kDa and about 106 to about 240 kDa are measured using another sample of the treated egg yolk (containing all molecular weight ranges) using the Lab-on-a-Chip micro-fluidic capillary electrophoresis (*µ*CE) Agilent 2100 Bioanalyzer from Agilent Technologies (Santa Clara, CA), as described in the Agilent Protein 230 Kit Guide (Publication Number: G2938-90054, Last Updated: 9/2006), which is incorporated herein by reference in its entirety. The Lab-on-a-Chip method does not accurately measure small peptides (i.e., peptides under about 13 kDa); therefore, the quantity of small peptides is estimated using the UV method discussed above and not the Lab-on-a-Chip method described herein. The general procedure for the Lab-on-a-Chip method is as follows. Aliquots of the treated liquid yolk are prepared by diluting the treated liquid yolk with a solution of Dulbecco's phosphate buffered saline containing 1 percent SDS from Sigma-Aldrich (St. Louis, MO) In 50 mL conical tubes. The samples are diluted to 100,000 parts per million (ppm) ± 1 percent and vortexed twice for approximately 10 to 20 seconds to ensure that the sample was dispersed. The samples are then shaken for approximately 45 minutes at approximately 250 rpm on a Barnstead Max Q 2000 Orbital shaker from Barnstead International (Dubuque, IA). Each sample is then centrifuged for 10 minutes at 4750 rpm in a Beckman Coulter Allegra X-15R Centrifuge from Beckman Coulter, Inc. (Fullerton, CA) to remove any insoluble structures, i.e., granules, floating in the liquid phase. Samples are prepared and run under both reducing and non-reducing conditions (with and without DL-Dithiothreitol, DTT (Sigma-Aldrich, D0632-1G) according to the Agilent Protein 230 Kit Guide. The samples are then filtered with a GHP Acrodisc 13mm syringe filter (P/N 4554T) just prior to loading the sample wells. The content of peptides from about 14 to about 105 kDa and peptides from about 106 to about 240 kDa is calculated therefrom.

As used herein, "simultaneously" or similar expression is defined as treating an egg yolk mixture by addition of protease and phospholipase enzymes at the same or substantially the same time but also includes sequential addition of protease and phospholipase enzymes provided that no more than 10 percent of the protease reaction or, alternatively, no more than 30 percent of the phospholipase reaction has been completed prior to the addition of the second added enzyme. For example, when protease is the first added enzyme, "simultaneous" treatment includes addition of phospholipase after no more than 10 percent of the protease reaction has been completed. When phospholipase is the first added enzyme, "simultaneous" treatment includes addition of protease after no more about 30 percent of the phospholipase reaction has been completed (i.e., no more than about 30 percent of the phospholipids have been converted to lysophospholipids). Preferably, the phospholipase and protease enzymes are added at the same or substantially the same time.

It was surprisingly found that proteases that cleave peptides into specific size ranges and in particular amounts of each size range are necessary to produce a treated egg yolk having increased functionality and flavor. Suitable protease enzymes have both endopeptidase and exopeptidase activities, such that when contacted with the egg yolk mixture the protease cleaves the egg yolk proteins to fragments, such that the composition comprises at least about 6000 ppm peptides less than about 13 kDa, at least about 2500 ppm peptides of about 14 to about 105 kDa, and less than about 2500 ppm peptides of about 106 kDa to about 240 kDa. Preferably, the treated egg yolk composition comprises at least about 7000 ppm peptides less than about 13 kDa, at least about 3000 ppm peptides of about 14 to about 105 kDa, less than about 1000 ppm peptides of about 106 kDa to about 240 kDa

While not wishing to be bound by theory, it is believed that small peptides. (i.e., peptides under about 5 kDa) are created by exopeptidases and are associated with flavor. In the case of protein hydrolysates, it is known that flavorful components are comprised of small peptides and free amino acids such as glutamate and aspartate. While also not wishing to be bound by theory, it is believed that peptides larger than about 5 to about 25 kDa are created by endopeptidases and are associated with emulsion stabilization. In egg yolk-mediated food emulsions, the yolk phospholipids are the primary emulsifying agents, but the yolk proteins are also believed to play a role in emulsification. While not wishing to be bound by theory, it is believed that the yolk proteins migrate to the oil-water interface and help prevent coalescence of oil droplet. For this role, peptides of about 14 to about 240 kDa are believed to be most efficient. The proteases useful in the methods provided herein provide the correct balance of both small flavorful peptide and emulsion stabilizing peptides.

Suitable protease enzymes include, but are not limited to, for example, proteases of microbial, fungal, animal, or plant origin, or the like. Specific examples of preferred proteases include FLAVOURZYME® from Novozymes (Franklinton, NC) and Accelerzyme CPG (DSM Food Specialties, Parsippany, NJ). FLAVOURZYME® is a fungal protease/peptidase complex having both endopeptidase and exopeptidase activities. FLAVOURZYME® is known to hydrolyze proteins under neutral or slightly acidic conditions, and therefore can be used for debittering bitter protein hydrolysates at low degrees of hydrolysis and for extensive hydrolysis of proteins resulting in flavor development.

Suitable phospholipase enzymes include those having phospholipase A1 activity, phospholipase A2 activity, or a combination thereof, although enzymes having phospholipase A1 activity are preferred. Of course, mixtures of enzymes having phospholipase A1 and phospholipase A2 activities may also be used, lf desired. Phospholipases useful in this Inventive process convert at least about 50 percent of the phospholipids In the egg yolk to lysophospholipids, preferably at least about 60 percent. Phospholipase A1 enzymes are preferred because phospholipase A1 enzymes selectively release saturated fatty acids which predominate in the sn1 position of phospholipids, whereas phospholipase A2 enzymes release unsaturated fatty acids which predominate in the sn2 position and can cause oxidative rancidity. A specific example of a preferred phospholipase A1 enzyme is LECITASE® Ultra from Novozymes (Franklinton, NC). A specific example of a suitable phospholipase A2 enzyme is Maxapal (DSM Food Specialties, Parsippany, NJ). It should be noted that enzyme treatment at colder temperatures for long periods of time should be avoided when using phospholipase enzymes having lipase side activities. Lipase side activity is generally undesirable due to release of free fatty acids from lipids which can cause off-flavors, as well as undesirably lower the pH, and accelerate oxidation and rancidity. Lipase side activities are generally inhibited at increased temperatures, such as 50°C or higher. For example, LECITASE® Ultra (Novozymes, Franklinton, NC) has lipase side activities at lower temperatures and should not be used at cold temperatures (i.e., 4°C to 45°C) for long periods of time (i.e., about 0.1 to about 14 days).

The simultaneous enzyme treatment is optionally followed by heat treatment for a time and temperature effective to inactivate the enzymes and to pasteurize the treated egg yolk mixture. For example, the mixture can be heated to about 65 to about 80 °C for about 0.25 to about 60 minutes. Heating egg yolk may have the benefit of developing desirable heat-induced flavors such as Maillard flavors, but heating can also cause aggregation of proteins which can reduce the emulsion-stabilizing capacity of the egg yolk. The treated egg yolk mixture may then be cooled to a temperature of about -30 to about 10 °C, such as in a heat exchanger. If desired, the treated egg yolk can be frozen or dehydrated to a powder by conventional methods for extended shelf life, such as, but not limited to, spray drying, freeze drying, drum drying, or the like.

The treated egg yolk mixtures described herein have dramatically improved functionality and flavor and can be incorporated into food products in lesser amounts than untreated egg yolks and/or whole eggs normally used in the food products. The treated egg yolk mixtures exhibit characteristics of robustness and functionality after treatment with elevated temperatures. For example, less than 2 volume percent aggregates form upon heating the treated egg yolk mixture at 71.1° C for 20 minutes. Preferably, substantially no aggregates form upon heating the treated liquid egg yolk at 71.1° C for 20 minutes. Thus, spoonable food products into which such treated egg yolk compositions are incorporated exhibit increased viscosity and flavor when compared with food products generated using similar amounts of untreated egg yolks and/or whole eggs. Moreover, use of the treated egg yolk compositions in food products provides texture, mouthfeel, stability, and flavor intensity of comparable food products generated using larger quantities of untreated egg yolks and/or whole eggs.

The increased functionality and flavor imparted by the treated egg yolk compositions permit the use of reduced amounts of treated egg yolk in the preparation of food products as compared to untreated egg yolks and/or whole eggs without adversely impacting organoleptic properties. This reduction In the amount of egg yolk required for preparation of food products with satisfactory functionality and flavor provides a significant reduction in cost of preparing food products for mass consumption. Moreover, because the amounts of egg yolk can be reduced without adversely affecting organoleptic properties, the overall cholesterol and/or fat content of the food products can also be reduced.

Food compositions are provided in which textural, organoleptic, and flavor qualities are provided by egg yolk compositions that have been treated simultaneously with phospholipase and protease enzymes as described above. The treated egg yolk composition described herein can be used to replace egg yolk or whole egg in a variety of food products, such as bakery items, mayonnaise, salad dressings, and desserts, such as custards, cakes, pies, and the like. Preferably, the treated egg yolk compositions provided herein are used in food products comprising water-continuous emulsions having a lipid content of about 5 to about 80 percent, such as mayonnaise, salad dressings, and the like. Advantageously, the treated egg yolk products provided herein can be used in the food product at about 30 to about 75 percent of the amount of whole egg and/or egg yolk traditionally used in the food product.

Conventional mayonnaise spreads and salad dressings are oil-in-water emulsions in which egg yolk and/or whole egg function as emulsifiers. It has been found that treating egg yolk under the conditions described herein provides compositions that are effective emulsifiers and can be used in place of untreated egg yolk or whole egg, even in an amount lower than that of untreated egg yolk or whole egg normally used in the conventional mayonnaise and salad dressing products. As a result, mayonnaise dressings and salad dressings with reduced egg content can be made having the flavor, texture, and appearance of conventional whole egg or egg yolk containing mayonnaise or salad dressings. These reduced-egg food products also have reduced fat and cholesterol content compared to traditional mayonnaise or salad dressings because lesser amounts of egg yolk is necessary to achieve similar flavor and functionality in the food product. Of course, the food products Incorporating the treated egg yolk composition may further comprise stabilizers, such as hydrocolloid stabilizers, if desired.

It was further discovered that the increased functionality imparted by the treated egg yolk compositions described herein permits the use of less oil in the preparation of food products containing whole egg and/or untreated egg yolk. Since the amount of oil can be reduced without adversely affecting organoleptic properties, the overall fat and/or cholesterol content, depending on the oil used, can be further reduced as compared to conventional food products.

Those skilled in the art will recognize that modifications and variations may be made without departing from the true spirit and scope of the invention. The Invention is, therefore, not to be limited to the embodiments described and illustrated but Is to be determined from the appended claims. Unless specified otherwise, all percentages and ratios are by weight.

### EXAMPLES

### Example 1

This example demonstrates that using different proteases in the same process results in yolk products having different viscosity and flavor characteristics. LECITASE® Ultra was used as the phospholipase in each experiment while the protease was varied according to the table below.

| **Enzymes** | **Enzyme Combination A** | **Enzyme Combination B** | **Enzyme Combination C** |
|---|---|---|---|
| LECITASE® Ultra (phospholipase from Novozymes, Franklinton, NC)* | 10 LU/gm | 10 LU/gm | 10 LU/gm |
| FLAVOURZYME® (protease from Novozymes, Franklinton, NC)* | 0.5 LAPU/gm | | |
| Alcalase 2.4 AF (protease from Novozymes, Franklinton, NC)* | | 0.0024 AU-A/gm | |
| Accelerzyme CPG (protease from DSM Food Specialties, Parsippany, NJ)* | | | 0.9 CPGU/gm |

| | | | |
|---|---|---|---|
| * Enzyme units are as specified by the respective suppliers. | | | |

10 percent salted liquid egg yolk (Rose Acres Farms, Seymour, IN) was preheated to 50°C. The enzyme combinations were added as specified in the table above to separate aliquots of the salted egg yolk preparation. All of the mixtures were incubated at 50°C for 3 hours. Combination A was then heated to 76.7° C for 20 minutes, while combinations B and C were heated to 71.1° C for 20 minutes. Combination A was heated to a slightly higher temperature than combinations B and C because Flavourzyme requires a higher temperature to inactivate a known side activity.

The three treated egg samples were tasted by a certified expert flavorist. Of the three enzyme combinations described in this example, it was found that combination (B) gave unacceptable flavor results, whereas combinations A and C gave desirable egg flavor, as described in the table below.

| **Enzyme Combination** | **Expert Flavorist Comments** |
|---|---|
| Combination A | Eggy, rich, preferred |
| Combination B | Green odor note, oxidized note, more acidic tart than Combination A, similar eggy to Combination A |
| Combination C | Closest to control for egg, rich oily, not sour, preference for egg and overall preference |

A) Protein Analysis

The treated egg yolk samples from each enzyme combination were then analyzed to correlate the flavor results with the compositional changes in the treated egg yolk. The high lipid content of egg yolk, as well as low solubility, makes analysis by conventional chromatographic or electrophoretic techniques difficult. The Lab-on-a-Chip micro-fluidic capillary electrophoresis (*µ*CE) Agilent 2100 Bioanalyzer from Agilent Technologies (Santa Clara, CA) was used to characterize the protein content of the enzyme-modified egg yolk proteins.

Each sample was prepared as described In the Agilent Protein 230 Kit Guide (Publication Number G2938-90054, Last Updated: 912006), which is incorporated herein by reference in its entirety, utilizing the Agilent^{©} Protein 230 Reagents Part I and Part II. Aliquots of the treated liquid yolk from each enzyme combination were prepared by diluting the treated liquid yolk with a solution of Dulbecco's phosphate buffered saline containing 1 percent SDS from Sigma-Aldrich (St. Louis, MO) in 50 mL conical tubes. In order to ensure that the assignment of the protein positions were accurate, a low molecular weight marker (4.5 kDa) and a high molecular weight marker (240 kDa) were dissolved in the sample buffer that is added to each sample so that the gel can be aligned to a molecular weight ladder that was added to one lane on each chip. The samples were diluted to 100,000 parts per million (ppm) ± 1 percent. Each sample was vortexed twice for approximately 10 to 20 seconds to ensure that the sample was dispersed. The samples were then shaken approximately 45 minutes at approximately 250 rpm on a Barnstead Max Q 2000 Orbital shaker from a stead International (Dubuque, IA). Each sample was then centrifuged for 10 minutes at 4750 rpm in a Beckman Coulter Allegra X-15R Centrifuge from Beckman Coulter, Inc. (Fullerton, CA) to remove any insoluble structures, i.e., granules, floating In the liquid phase.

All samples were prepared and run under both reducing and non-reducing conditions (with and without DL-Dithiothreitol, DTT (Sigma-Aldrich, D0632-1G)) according to the Agilent Protein 230 Kit Guide. The samples were then filtered with a GHP Acrodisc 13mm syringe filter (P/N 4554T) just prior to loading the sample wells. Multiple repetitions (n=5) of each sample were run and analyzed on the Agilent 2100 Bioanalyzer.

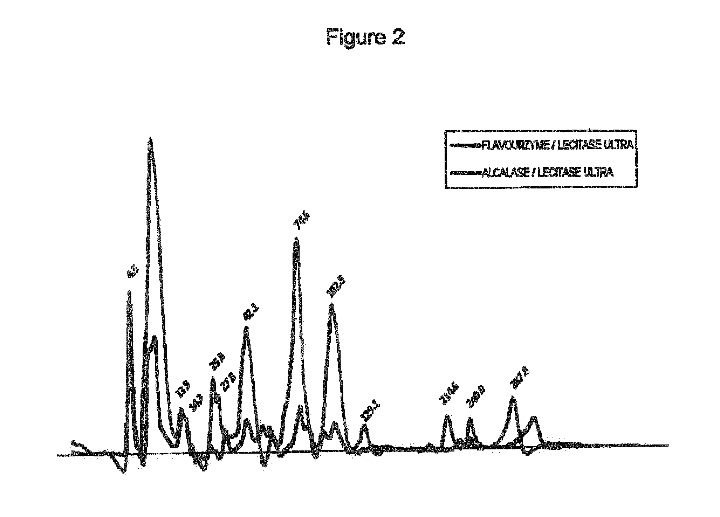

As shown in FIG. 2, the electrophoretic data acquired with the Agilent 2100 Bioanalyzer illustrates the differences in the peptide composition of the sample treated with enzyme combination A versus the sample treated with enzyme combination B.

### Example 2

This example demonstrates that the simultaneous enzyme treatment of the inventive method gives a different and superior product with a unique texture and natural flavor profile as compared to the treated egg product produced by the sequential enzyme treatment described in JP2002233334 A2. Treated egg yolk compositions were prepared according to the simultaneous inventive method and the prior art sequential enzyme treatment as described below.

1) Simultaneous Enzyme Treatment (Inventive Method)

10 percent salted, pre-pasteurized liquid egg yolk (Rose Acres Farms, Seymour, IN) was preheated to 50°C. 10LU/g egg yolk LECITASE® Ultra phospholipase A1 and 0.5 LAPU/g egg yolk FLAVOURZYME™ protease were added to the liquid egg yolk and the mixture was incubated at 50°C for 3 hours.

2) Sequential Enzyme Treatment (Prior Art Method)

JP2002233334 A2, listing inventors Nariko Hayashi and Yoshikazu Nakanishi and assigned to Knorr Food Product K.K., describes the sequential addition of phospholipase A2 and protease enzymes to egg yolk. The examples described in JP2002233334 use Lecitase phospholipase A2 (Novonordisk K.K.) and protease P (Amano Seiyaku K.K.). Because neither of those enzymes was believed to be commercially available at the time of conducting the experiments described herein, suitable replacement enzymes were sought out. U.S. Patent 6,312,739 also lists Hayashi and Nakanishi as inventors and is assigned to Knorr Foods. The '739 patent is directed to hydrolyzing yolk with protease and uses Protin A protease (from Daiwa Kasei Co., Ltd., now a subsidiary of Amano Enzymes) in the examples. One of my co-inventors contacted Amano Enzymes and Amano Enzymes indicated that "Protin A" was replaced commercially by "PROTIN SD-AY10," an alkaline protease. Therefore, enzymes believed to best correspond with the published characteristics and properties of Lecitase phospholipase A2 and the proteases were substituted for purposes of the sequential enzyme treatment taught by JP2002233334. MAXAPAL A2 phospholipase (E.C. 3.1.1.4) (DSM Food Specialties, Parsippany, NJ) and PROTIN SD-AY10 from Amano Enzymes (Elgin, IL) were selected. Although Amano Enzymes now appears to offer an enzyme called "Protease P 'Amano' 6," "PROTIN SD-AY10" and "Protease P 'Amano' 6" are both alkaline serine proteases and are expected to give reasonably similar results. Therefore, the experiment described herein utilizes Protin SD-AY10 for purposes of replicating the sequential enzyme treatment of JP2002233334.

Egg yolks from two dozen eggs were separated and mixed to prepare about 2 kg unsalted egg yolk slurry. The egg yolk slurry was pasteurized at 64.5°C for 3.5 minutes and then cooled to 50°C. 10 LU/g MAXAPAL A2 phospholipase was added to the egg yolk slurry and incubated for one hour before 36 PU/g PROTIN SD-AY10 protease was added and Incubated for an additional two hours.

### A) Mayonnaise Preparation

The treated egg yolk positions from both the inventive and prior art methods were then split into two samples each, with one sample from each method being cooled Immediately (hereinafter "inventive unheated" sample and "prior art unheated" sample, respectively) while the other sample from each method was heat treated to 71.1 °C for 20 minutes (hereinafter the "inventive heated" sample and "prior art heat sample, respectively). The inventive heated and prior art heated samples were then cooled in an water bath.

The four treated egg yolk compositions were used to prepare mayonnaise according to a standard commercial formula and process according to the table below.

| **Ingredients** | **Amount (percent)** | | |
|---|---|---|---|
| | Treated Egg Yolk | Control A | Control B |
| Water | 14.9 | 14.9 | 13.5 |
| Soybean Oil | 77.8 | 77.8 | 77.8 |
| Treated Egg Yolk | 1.4 | 0 | 0 |
| Unmodified Egg Yolk | 0 | 1.4 | 2.9 |
| Salt | 0.8 | 0.8 | 0.8 |
| Vinegar | 4.3 | 4.3 | 4.3 |
| Sugar | 0.7 | 0.7 | 0.7 |

Four batches of mayonnaise were prepared and flavored with 1.44 percent treated egg yolk based on the weight of the mayonnaise, with one batch each prepared from the inventive heated sample, the inventive unheated sample, the prior art heated sample, and the prior art unheated sample. Two additional control batches were prepared for characterization and comparison. Control A was prepared with 1.4 percent of 10 percent salted unmodified (untreated) egg yolk and Control B was prepared with 2.9 percent of 10 percent salted unmodified (untreated) egg yolk. Control B represents a conventional mayonnaise product.

Viscosity (yield stress) was analyzed using a Haake VT550 viscometer (Haake USA, Paramus, NJ) for mayonnaise prepared the inventive heated sample, the inventive unheated sample, the prior art heated sample, the prior art unheated sample, and control A sample. The data in the table below demonstrates that the heated samples of the inventive simultaneous method and the prior art sequential method generated mayonnaise with distinctly different texture characteristics. The mayonnaise prepared with the prior art heated sample had poor viscosity, which was even lower than the viscosity of Control A, which was made with 5 percent of the egg yolk traditionally used in the recipe. While the mayonnaise prepared with the prior art unheated sample had acceptable viscosity, the mayonnaise prepared with the prior art heated sample was unacceptably runny. Both mayonnaises prepared with the inventive heated and inventive unheated samples had acceptable viscosity.

| **Sample** | **Mayonnaise Viscosity (Haake) Pa** |
|---|---|
| Control A (50% Egg Yolk) | 104 |
| Control B (100% Egg Yolk) | Not measured |
| Inventive Heated | 158 |
| Inventive Unheated | 280 |
| Prior Art Heated | 82 |
| Prior Art Unheated | 270 |

A trained flavor expert with extensive experience in the field of egg flavor analysis was presented with the mayonnaise samples in a blind and randomized order. The trained flavor expert evaluated the mayonnaise samples using descriptive analysis based on the attributes of eggyness, stiffness, off flavors, sourness, oiliness, and overall preferred mayonnaise flavor. The expert's comments are provided in the table below.

| **Sample** | **Sensory Data** |
|---|---|
| Control A (1.44% yolk) | ● None |
| Control B (2.88% yolk) | ● Salty |
| | ● Oily feel |
| | ● Less balanced egg flavor |
| Mayonnaise prepared with inventive heated sample (Simultaneous Method) | ● Preferred over samples |
| | ● Eggier flavor/oily |
| | ● Balanced between egg and oil |
| | ● Slightly tart |
| | ● No off flavors |
| Mayonnaise prepared with inventive unheated sample (Simultaneous Method) | ● Not analyzed |
| Mayonnaise prepared with prior art heated sample (Sequential Method) | ● Runny texture |
| | ● Vinegar aroma |
| | ● Metallic |
| | ● Tart |
| | ● Flat |
| Mayonnaise prepared with prior art unheated sample (Sequential Method) | ● Stiffer texture |
| | ● Mild |
| | ● Flatter slight cardboard |
| | ● More dairy/creamy |

The sensory data indicated significant differences among the samples. The flavor expert selected the mayonnaise prepared with the inventive heated sample as the preferred mayonnaise. According to the flavor expert, the mayonnaise prepared with the inventive heated sample had superior texture and egg flavor as compared to the other samples. The mayonnaise prepared with the prior art heated sample was flat and had runny texture, a metallic and tart flavor, and vinegar aroma. The mayonnaise prepared with the prior art unheated sample had a stiff texture, mild flavor, more of a dairy/creamy (taste), and was flatter, slight cardboard flavor.

### B) Visual Analysis

The egg yolk samples prepared as above were evaluated after centrifuging based on visual analysis. The visual differences in the samples are described in the table below.

| **Sample** | **Characteristics** |
|---|---|
| Control | Liquid yolk |
| Inventive heated | Very thin layer of particulate matter (less than 2 % by volume) |
| Prior art heated | Very large layer of particulate matter (about 13 % by volume) |
| Inventive unheated | Milky/chalky |
| Prior art unheated | Yellow particulate matter |

The inventive heated yolk sample was very yellow and transparent but had a very thin layer of material at the bottom of the glass vial, while its prior art heated counterpart was transparent but had a very large layer of material at the bottom of the glass vial. Also, for the prior art heated yolk sample, particulate matter stuck to the sides of the glass vial, which was not observed in the inventive heated sample. The inventive unheated yolk sample displayed a milky color with a chalky appearance on the sides on the glass vial. The prior art unheated yolk sample had a much darker yellow color than the inventive unheated yolk sample, as well as had small particulate matter stuck to the sides of the glass vial. The results indicate that the heating step at 71.1°C for 20 minutes causes physical changes to occur, such as formation of aggregates as is shown by the amount of particulate matter formed in the samples. The inventive heated sample did not have the large protein aggregates that were visible in the prior art sample. Therefore, it was determined that the treated egg yolk produced by the inventive method results in a more robust egg product that can withstand the effects of heating.

### C) Quantitative Protein Analysis

The Agilent 2100 Bioanalyzer was used to clearly demonstrate that the inventive simultaneous method generates a treated egg yolk having specific compositional differences as compared to the treated egg yolk produced in the sequential method of JP2002233334. It is believed that these compositional differences are associated with the unique functionality and flavor of the treated egg yolk compositions of the invention.

Inventive heated, Inventive unheated, prior art heated, and prior art unheated samples as prepared above were analyzed for low molecular weight peptide content (<13 kDa) by measuring the proteinaceous material in the fraction soluble in 12 percent trichloracetic acid (TCA). The sample was brought to 12 percent TCA to precipitate the larger peptides and then centrifuged at 14,000 rpm for 6 minutes to remove the precipitate. A Beckman-Coulter DU530 spectrophotometer was used to measure the absorbance at 280 nm to calculate the low molecular weight peptide content. The content of larger peptides (peptides of about 14 to about 240 kDa) were measured using the Agilent 2100 Bioanalyzer as described in Example 1 above. Peptides having a molecular weight greater than 24 kDa were not measured. A control (untreated liquid egg yolk) was also analyzed. The results are shown in the table below.

| | **Peptides (ppm)** | | |
|---|---|---|---|
| **Sample** | **<13 kDa** | **14-105 kDa*** | **106-240 kDa*** |
| Inventive (heated) | 8288 | 3432 | 163 |
| Prior Art (heated) | 5325 | 570 | 44 |
| Inventive (unheated) | 9450 | 5071 | 234 |
| Prior art (unheated) | 4563 | 4832 | 3024 |
| Control | 4100 | 8823 | 3709 |

| | | | |
|---|---|---|---|
| * N=5 for at least the 14-105 and 106-240 kDa peptides. | | | |

As expected, all of the enzyme-treated egg yolk samples have a higher concentration of low molecular weight peptides than the control. However, the Inventive samples have a considerably higher concentration of low molecular weight peptides than both of the prior art samples. Heating gives a slight decrease in low molecular weight peptide concentration in the inventive process and a slight Increase In such peptides in the prior art sample. As reported earlier in this example, heating caused a striking visual change in the prior art heated sample, causing formation of about 13 percent by volume of visible aggregates, as compared to less than 2 percent by volume of visible aggregates in the inventive heated sample.

The inventive unheated sample had more mid-range (14-105 kDa) peptides and much less of the high molecular weight (106-240 kDa) peptides (which represent egg yolk proteins that have been minimally hydrolyzed by the protease) as compared to both of the prior art samples. Finally, after heating, the prior art sample shows a large reduction In both mid-range and high molecular weight peptides while the inventive sample shows a much more modest reduction.

### D) Protein descriptive analysis - Comparison of heated samples

Each sample was prepared as described using the Agilent Protein 230 Kit as previously described in Example 1. The electrophoretic and protein data acquired with the Agilent 2100 Bioanalyzer further demonstrates the compositional (i.e., protein) differences In the inventive heated and prior art heated samples.

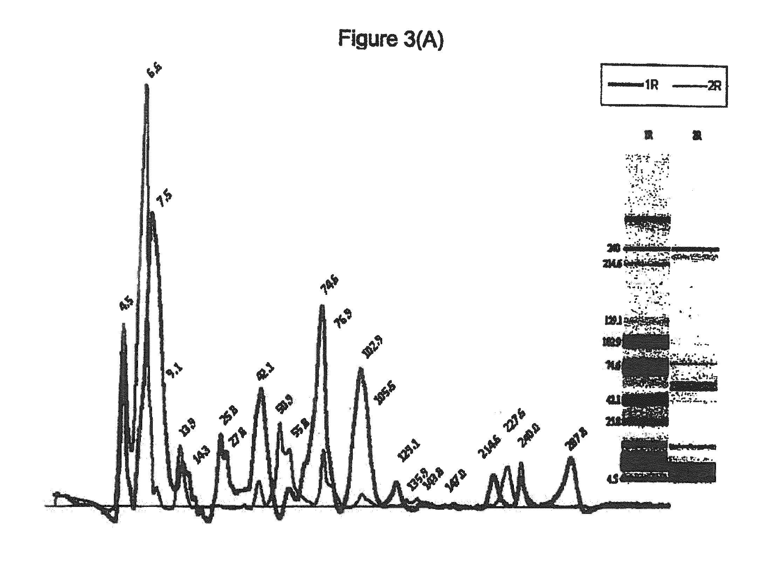

As shown in the gel and electrophoretic data in FIG. 3(A), the inventive heated sample (1R) and the prior art heated sample (2R) have numerous bands and peaks present in one sample that are not present in the other. The peaks and bands at 4.5 and 240 kDa correspond to the Internal marker. More specifically, there are at least six bands and peaks present in sample 1R at 25.8, 27.8, 74.6, 102.9, 129.1, and 214.6 kDa that are not present In sample 2R. There are also at least three bands and peaks present In sample 2R at 13.9, 50.9, and 227.6 kDa that are not present in sample 1R. There is also significant difference in the intensity of the bands and peaks. As reflected by the substantial differences between the protein composition of the treated egg yolk produced by the Inventive and prior art methods, it was concluded that these two methods have generated different products. These differences substantiate that the texture and flavor modification are different based upon whether the inventive or prior art method is employed.

This data, both the visual and electrophoretic data, clearly demonstrates that the simultaneous inventive method and the sequential prior art method have different effects on the proteins and their environment, such as salt effects, aggregate formation, different covalent bonding, increased hydrogen bonding, hydrophobic interactions, and possible electrostatic or steric effects. While the mechanisms causing these effects is not completely understood, the treated egg yolk thus produced by the simultaneous method of the invention is substantially different than that produced by the prior art process.

### E) Protein descriptive analysis - Comparison of unheated samples

The electrophoretic and protein data acquired with the Agilent 2100 Bioanalyzer further demonstrates the compositional (i.e., protein) differences in each of the inventive unheated and prior art unheated samples.

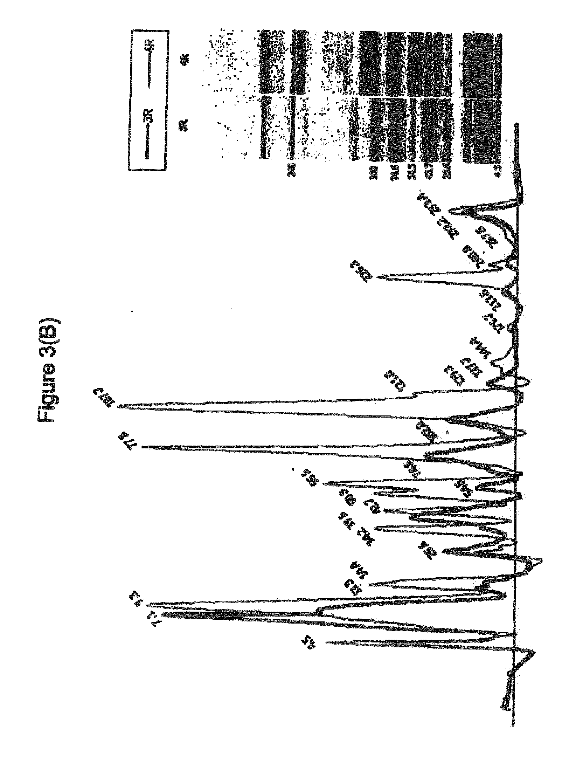

As shown in the gel and electrophoretic data in FIG. 3(B), the inventive unheated sample (3R) and the prior art unheated sample (4R) have numerous bands and peaks present in one sample that are not present in the other. Again, the peaks and bands at 4.5 and 240 kDa correspond to the internal marker, Specifically, there are at least four bands and peaks present in sample 3R at 39.6, 102.0, 129.3, and 213.5 kDa that are not present In sample 4R. There are also at least five bands and peaks present in sample 4R that are not present in sample 3R, the most notable being located at 50.9, 85.6, 77.8, 107.7, and 226.3 kDa.

This data again demonstrates that the inventive unheated sample and the prior art unheated sample have distinctly different compositions and that these differences can be attributed to the differences between the inventive simultaneous method and the sequential method of the prior art. The differences in composition are also evident by physical examination of the samples, as described above. The prior art unheated sample contains particulate matter, while the inventive unheated sample has a chalky residue on the side of the glass vial (i.e., no individual particles). These differences again substantiate that the texture and flavor modification are different based upon whether the inventive or prior art method is employed and are not due to the heating step.

### F) Protein Descriptive Analysis - Comparison of inventive heated sample with prior art unheated sample

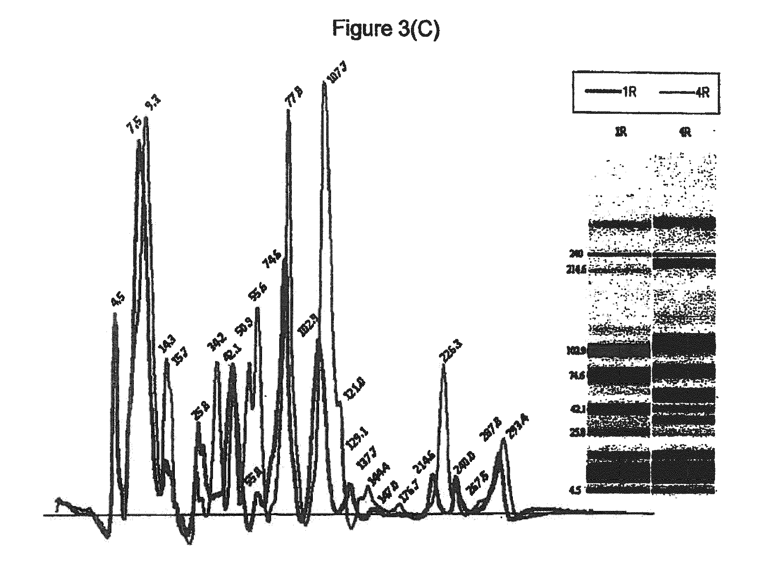

FIG. 3(C) further compares the inventive heated sample (1R) with the prior art unheated sample (4R). FIG. 3(C) shows that the inventive simultaneous method and prior art sequential method generate distinctly different protein profiles. The electrophoretic data shows numerous large peaks for the prior art unheated sample above 20 kDa that are not found in the data for the inventive heated sample, which are believed to be correlated to the particulate matter found in the prior art unheated sample. These differences further substantiate that the texture modification is different based upon whether the inventive or prior art method is employed.

### G) Fatty Acid Content

To further distinguish the egg yolk products of the inventive and prior art methods, the free fatty acid distribution and phospholipid conversion was measured.

| **Free Fatty Acids** (Distribution in parts per million (ppm)) | | |
|---|---|---|
| | **Inventive** | **Prior Art** |
| Butanoic 4:0 | <10 | <10 |
| Decanoic 10:0 | <10 | <10 |
| Dodecanoic 12:0 | <10 | <10 |
| Hexadecanoic 16:0 | 12133 | 456 |
| Hexanoic 6:0 | <10 | <10 |
| Octadecadienoic 18:2 | 833 | 8315 |
| Octadecanoic 18:0 | 5554 | 314 |
| Octadecenoic 18:1 | 3571 | 12189 |
| Octanoic 8:0 | <10 | <10 |
| Tetradecanoic 14:0 | 72 | <10 |
| Propanoic 5:0 | <40 | <40 |

The results indicate that the generation of these two distinct free fatty acid profiles is directly related to the mechanism by which the phospholipase enzymes generate fatty acids. It was calculated that at least 50 percent of phospholipids were converted to lysophospholipids in the inventive method. The phospholipase used in the inventive method (LECITASE^{®} Ultra) acts on phospholipids (phosphatides, lecithins) as a phospholipase type A1 to yield the corresponding lyso-1-phospholipid plus free fatty acid (FFA), while the phospholipase used in the prior art method (MAXAPAL A2™) is a purified phospholipase A2 (phoshatide-2-acyl-hydrolase, E.C. 3.1.1.4) that acts on phospholipids to generate partial hydrolysis of the phospholipids to better obtain improved phospholipid emulsification properties.

As can be seen in the table above, LECITASE^{®} Ultra generated two predominantly unsaturated free fatty acids: hexadecanoic 16:0 (12133 ppm) and octadecanoic 18:0 (5554 ppm). MAXAPAL A2™ generated two predominantly saturated (R1) free fatty acids: octadecenoic 18:1 (12189 ppm) and octadecadienoic 18:2 (8315 ppm). It is well known that unsaturated free fatty acids are more susceptible to oxidation that the same fatty acids attached to glycerides; therefore, the inventive product is more stable to oxidation, rancidity and off-flavor generation than egg yolks treated with PLA2-type phospholipase.

### Example 3

This example further demonstrates that the simultaneous enzyme treatment of the inventive method gives a different and superior product with a unique texture as compared to the treated egg product produced by the sequential enzyme treatment of the JP2002233334 reference even when using the same preferred enzymes in both methods. A treated egg yolk composition was prepared according to the enzyme treatment described in JP2002233334A2 as described below.

Egg yolks from whole eggs were separated from the whites. 2 parts egg yolk were combined with one part water and mixed to provide unsalted egg yolk slurry. The egg yolk slurry was pasteurized at 64.5°C for 3.5 minutes and then cooled to 45°C. 11.8 LU/g LECITASE® Ultra phospholipase was added to the egg yolk slurry and incubated for one hour before adding 0.2 LAPU/g egg yolk FLAVOURZYME™ protease and incubating for an additional 2 hours. The sample was then cooled in an ice water bath.

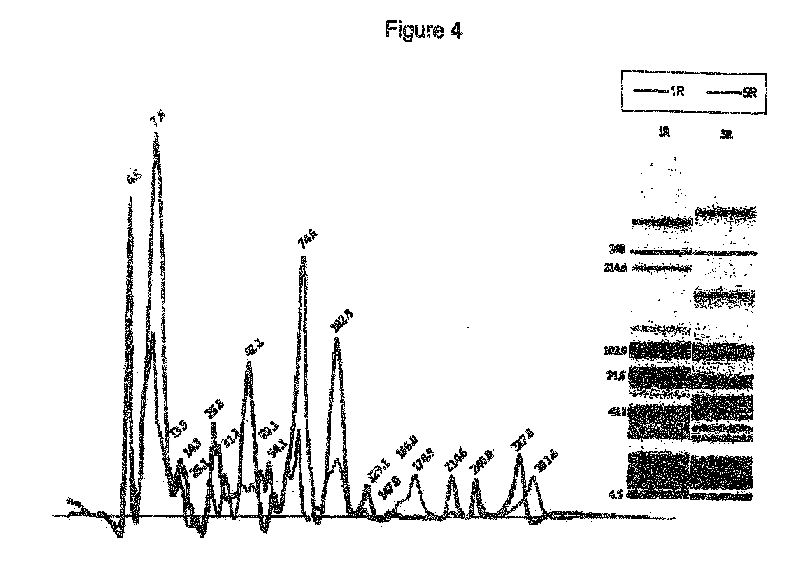

The treated yolk composition (hereinafter sample "5R") was then analyzed using the Agilent 2100 Bioanalzyer as described previously In Examples 1 and 2 and compared with sample "1R" from Example 2. As shown in FIG. 4, while there are several peaks at similar positions, the intensity of the peaks is very different, with the intensity of the peaks for the Inventive heated sample (1R) generally being greater than the corresponding peaks in sample 5R.

The viscosity of each treated yolk sample was then measured using a Haake VT550 viscometer (Haake USA, Paramus, NJ) to further demonstrate that the different methods yield products having different textural characteristics. The prior art sample had much lower viscosity than the inventive sample. The protein data and viscosity data further demonstrate that the compositional differences between the inventive heated sample (1R) and the prior art sample (5R) prepared with the preferred enzymes yield products with different textural characteristics.

| | **Sample 1R** | **Sample 5R** |
|---|---|---|
| Viscosity (Haake units) | 200 | 153 |
| pH/TA | 5.73/0.96 | 5.93/0.58 |

### Example 4

This example further demonstrates that the simultaneous enzyme treatment of the inventive method gives a different and superior product with a unique texture and natural flavor profile as compared to egg yolk sequentially treated with the same enzymes. In this example, treated egg yolk compositions were prepared as summarized in the table below and as explained in greater detail below.

| | **Simultaneous Method (Inventive)** | **Sequential Method A (Comparative)** | **Sequential Method B (Comparative)** |
|---|---|---|---|
| LECITASE® Ultra Phospholipase | 3.0 hours | 3.0 hours | 1.5 hours |
| FLAVOURZYME Protease | | 1.5 hours | 1.5 hours |

### A) Simultaneous Enzyme Treatment (Inventive Method)

10 percent salted, pre-pasteurized liquid egg yolk (Rose Acres Farms, Seymour, IN) was preheated to 50°C. Then 10 LU/g LECITASE® Ultra phospholipase and 0.5 LAPU/g FLAVOURZYME™ protease were added to the liquid egg yolk and the mixture was incubated at 50°C for 3 hours. The treated egg yolk was then heated to 76° C for 10 minutes.

### B) Sequential Enzyme Treatment (Comparative Method A)

10 percent salted, pre-pasteurized liquid egg yolk was preheated to 50°C. Then 10 LU/g LECITASE® Ultra phospholipase was added to the liquid egg yolk and incubated at 50°C for 1.5 hours. Then 0.5 LAPU/g FLAVOURZYME protease was added to the mixture and incubated for an additional 1.5 hours at 50°C. The treated egg yolk was then heated to 76° C for 10 minutes.

### C) Sequential Enzyme Treatment (Comparative Method B)

10 percent salted, pre-pasteurized liquid egg yolk was preheated to 50°C. Then 10 LU/g LECITASE® Ultra phospholipase was added and incubated at 50° F for 1.5 hours. The mixture was then heated to 160° F for 16 seconds to inactivate the phospholipase enzyme. Then 0.5 LAPU/g FLAVOURZYME egg yolk was added and incubated for 1.5 hours at 50° C. The treated egg yolk was then heated to 76° C for 10 minutes.

The treated egg yolks from the inventive simultaneous method and both of the comparative sequential methods were then used to prepare separate batches of mayonnaise as prepared in Example 2.

### Viscosity Analysis

Viscosity (yield stress) was analyzed using a Haake VT550 viscometer (Haake USA, Paramus, NJ) for each batch of mayonnaise prepared with egg yolk from the simultaneous inventive method and the comparative sequential methods.

| **Sample** | **Mayonnaise Viscosity (Haake)** |
|---|---|
| Simultaneous Method (Inventive) | 170 |
| Sequential Method A (Comparative) | 104 |
| Sequential Method B (Comparative) | 97 |

The experiment surprisingly showed that the mayonnaise prepared with the treated egg yolk from the inventive simultaneous method had increase viscosity over the mayonnaise prepared with the treated yolk from the comparative methods even when using the same enzymes in each experiment.

### Flavor Analysis

A certified flavor expert with extensive experience in the field of egg flavor analysis was presented with the samples in a blind and randomized order. The flavor expert evaluated the samples using descriptive analysis based on attribute of eggyness, stifness, off flavors, sourness, oiliness, and overall preferred mayonnaise flavor. The expert's comments are provided in the table below.

| **Sample** | **Sensory Data** |
|---|---|
| Simultaneous Method (Inventive) | ● Thicker, more eggy |
| Sequential Method A (Comparative) | ● Thin lemony acidic tart |
| | ● Inferior In texture and egg flavor compared to inventive sample |
| Sequential Method B (Comparative) | ● Thinner unacceptable texture |
| | ● More dairy than simultaneous inventive sample but less eggy |
| | ● Inferior in texture and egg flavor compared to inventive sample |

The sensory data indicated significant differences among the three mayonnaise samples. According to the flavor expert the mayonnaise prepared with the treated egg yolk from the inventive simultaneous method had a thicker texture and more eggy flavor as compared to the comparative samples prepared with treated egg yolk from the sequential method, The mayonnaise prepared with the treated egg yolk of comparative sequential method A had a thin consistency and lemony, acidic, tart flavor. The mayonnaise prepared with the treated egg yolk from the comparative sequential method B had a thinner, unacceptable texture. While the mayonnaise from comparative method B had more dairy flavor than the simultaneous inventive sample, the mayonnaise had less egg flavor. According to the flavor expert, both mayonnaise samples made with treated egg from the comparative sequential methods were inferior in both texture and egg flavor compared to the mayonnaise sample prepared with treated yolk from the inventive simultaneous method.

### Protein Analysis

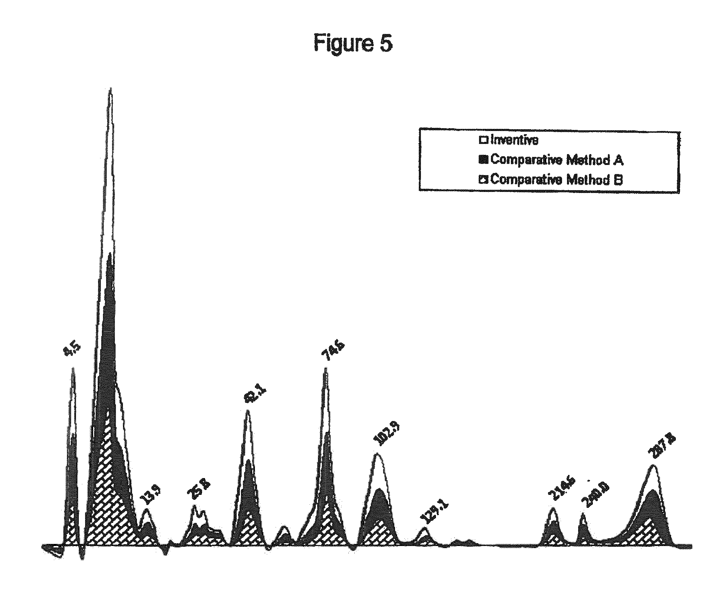

Each sample (n=8) was prepared with the Agilent Protein 230 Kit as previously described in Example 1. The electrophoretic data acquired with the Agilent 2100 Bioanalyzer further demonstrates the compositional (i.e., protein) differences in each of the egg yolk compositions produced by the inventive simultaneous method and comparative sequential methods. As shown in the electrophoretic data in FIG. 5, the samples from the inventive simultaneous method and the comparative sequential methods show similar peak positions but substantial differences in peak intensities. The sample derived from the comparative method B had the lowest peak intensities. The sample derived from comparative method A had peaks with intermediate intensity as compared with the peaks of the inventive simultaneous method sample and the sample from comparative method B. It is believed that the differences in peak Intensity account for the differences in the sensory and viscosity data.

While the invention has been described in terms of preferred embodiments, those skilled in the art will recognize that the invention can be practiced with modification within the spirit and scope of the appended claims.
1. A method for preparing a treated egg yolk composition having improved egg flavor and functionality, the method comprising:
   (1) forming a liquid egg yolk mixture; and
   (2) simultaneously treating the egg yolk mixture with phospholipase and protease enzymes for a time and at a temperature effective for the protease to cleave proteins in the yolk to provide a peptide mixture comprising at least about 6000 ppm peptides less than about 13 kDa, at least about 2500 ppm peptides of about 14 to about 105 kDa, and less than 2500 ppm peptides of about 106 to about 240 kDa, and effective for the phospholipase to convert at least about 50 percent of phospholipids in the yolk mixture to lysophospholipids to provide the treated egg yolk composition.
2. The method according to clause. 1, **characterized in that** the method further comprising heating the treated egg yolk composition at a temperature effective for inactivating the enzymes and pasteurizing the egg yolk composition after completion of the treatment of step (2), and cooling the treated yolk composition following heat treatment.
3. A method for preparing an egg-flavored food composition, the method comprising combining (1) a food preparation to be egg-flavored and (2) an egg flavoring composition for imparting the flavor of egg, characterized in that the egg flavoring composition comprising a treated egg yolk composition obtained by the method according to clauses 1 or 2.
4. The method according to any one of clauses 1 to 3, whereby the enzyme treatment step is carried out at about 40 to about 60° C for about 1 to about 6 hours.
5. The method according to any one of clauses 1 to 4, **characterized in that** the aqueous egg yolk mixture comprises about 2 to about 10 percent salt.
6. The method according to any one of clauses 1 to 5, **characterized in that** the phosholipase is a phospholipase A1 enzyme.
7. The method according to any one of clauses 1 to 6, **characterized in that** the peptide mixture comprises at least about 7000 ppm peptides less than about 13 kDa, at least about 3000 ppm peptides of about 14 to about 105 kDa, and less than about 1000 ppm peptides of about 106 kDa to about 240 kDa.
8. The method according to any one of clauses 1 to 7, **characterized in that** the method further comprising pre-heating the egg yolk mixture to a **temperature** of about 40 to about 60° C prior to step (2).
9. The method according to any one of clauses 1 to 8, **characterized in that** the method further comprising heating the treated egg yolk composition at a temperature effective for inactivating the enzymes and pasteurizing the egg yolk composition after completion of the treatment of step (2).
10. The method according to clause 3, **characterized in that** the food preparation is selected from the group consisting of mayonnaise, salad dressing, bread, custard, cake, and pie.
11. The method according to clause 3, **characterized in that** the egg flavoring composition is combined with the food preparation in an amount of about 30 to about 75 percent of the amount of whole egg or egg yolk normally used in the food preparation.
12. A food flavoring composition for imparting the increased egg flavor and functionality, the flavoring composition obtained by the method according to any of the clauses, 1 or 2, and 4 to 9.
13. A food product comprising a treated egg yolk composition for imparting the flavor and functionality of egg, wherein the treated egg yolk composition is obtained by a process comprising:
   (1) forming a liquid egg yolk mixture; and
   (2) simultaneously treating the egg yolk mixture with phospholipase and protease enzymes for a time and at a temperature effective for the protease to cleave proteins in the yolk to provide a peptide mixture comprising at least about 6000 ppm peptides less than about 13 kDa, at least about 2500 ppm peptides of about 14 to about 105 kDa, and less than about 2500 ppm peptides of about 106 to about 240 kDa, and effective for the phospholipase to convert at least about 50 percent of phospholipids in the yolk mixture to lysophospholipids to provide the treated egg yolk composition.
14. The food product according to clause 13, wherein the peptide mixture comprises at least about 7000 ppm peptides less than about 13 kDa, at least about 3000 ppm peptides of about 14 to about 105 kDa, and less than about 1000 ppm peptides of about 106 kDa to about 240 kDa.
15. The food product according to clause 13 or 14, wherein the food product comprises a water-continuous emulsion having a lipid content of about 5 to 80 percent.
16. The food product according to any one of clauses 13 to 15, **characterized in that** the food product is selected from the group consisting of mayonnaise and salad dressing.
17. The food product according to any one of clauses 13 to 16, **characterized in that** the food product comprises the treated egg yolk composition in an amount of about 30 to about 75 percent of the amount of whole egg or egg yolk normally used in the food product.
18. A food flavoring composition for imparting increased egg flavor and functionality, the flavoring composition comprising lysophospholipids and an egg yolk peptides comprising peptide mixture comprising at least about 6000 ppm peptides less than about 13 kDa, at least about 2500 ppm peptides of about 14 to about 105 kDa, and less than about 2500 ppm peptides of about 106 to about 240 kDa, and effective for the phospholipase to convert at least about 50 percent of phospholipids in the yolk mixture to lysophospholipids to provide a food flavoring composition, wherein the flavoring composition is obtained by simultaneously treating liquid egg yolk with phospholipase and protease enzymes.

## Claims

1. An egg yolk composition having increased egg flavor and functionality, the egg yolk composition comprising phospholipids, wherein at least 50 percent of the phospholipids are lysophospholipids, and peptides comprising at least about 6000 ppm peptides less than about 13 kDa, at least about 2500 ppm peptides of about 14 to about 105 kDa, and less than about 2500 ppm peptides of about 106 to about 240 kDa.

2. The egg yolk composition according to claim 1, wherein the composition has an increased egg flavor compared to egg yolk.

3. The egg yolk composition according to claim 1 or 2, wherein the peptide mixture comprises at least about 7000 ppm peptides less than about 13 kDa, at least about 3000 ppm peptides of about 14 to about 105 kDa, and less than about 1000 ppm peptides of about 106 kDa to about 240 kDa.

4. The egg yolk composition according to any one of claims 1 to 3, further comprising about 2 to about 10 percent salt.

5. The egg yolk composition according to any one of claims 1 to 4, wherein at least 60 percent of the phospholipids are lysophospholipids.

6. The egg yolk composition according to any one of claims 1 to 5, wherein the egg yolk composition is obtainable from a process comprising the steps of:
(1) forming an aqueous egg yolk mixture; and
(2) simultaneously treating the egg yolk mixture with phospholipase and protease enzymes for a time and at a temperature effective for the protease to cleave proteins in the yolk to provide a peptide mixture comprising at least about 6000 ppm peptides less than about 13 kDa, at least about 2500 ppm peptides of about 14 to about 105 kDa, and less than about 2500 ppm peptides of about 106 to about 240 kDa, and effective for the phospholipase to convert at least about 50 percent of phospholipids in the yolk mixture to lysophospholipids to provide a food flavoring composition having an increased egg flavor compared to egg yolk.

7. Use of the egg yolk composition of any one of claims 1 to 6 for imparting the flavor and functionality of egg in a food product.

8. The use according to claim 7, wherein the food product comprises a water-continuous emulsion having a lipid content of 5 to 80 percent.

9. The use according to claims 7 or 8 , wherein the food product is selected from the group consisting of mayonnaise, salad dressing, bread, custard, cake, and pie.

10. The use according to any one of claims 7 to 9, wherein the food product comprises the egg composition in an amount of 30 to 75 percent of the amount of whole egg or egg yolk normally used in the food product.
